# EUROPEAN PATENT APPLICATION

(11) **EP 4 715 911 A1**
(43) Date of publication of application: **25.03.2026**
(21) Application number: 25200969.1
(22) Date of filing: 09.09.2025
(51) Int. Cl.: H01M 8/0258, C25B 9/19, C25B 9/77, C25B 15/08, H01M 8/026

(54) **SEPARATOR, ELECTROCHEMICAL CELL, AND ELECTROLYTIC DEVICE**

(30) Priority: 19.09.2024 JP 2024162497
(71) Applicant: KABUSHIKI KAISHA TOSHIBA, Kawasaki-shi, Kanagawa, 212-0013 (JP)
(72) Inventor: HONGO, Takuya, Kawasaki-shi, Kanagawa (JP); HIRAOKA, Toshiro, Kawasaki-shi, Kanagawa (JP); HOSONO, Yasuharu, Kawasaki-shi, Kanagawa (JP); KITAGAWA, Ryota, Kawasaki-shi, Kanagawa (JP); KOFUJI, Yusuke, Kawasaki-shi, Kanagawa (JP)
(74) Representative: Hoffmann Eitle

(57) **Abstract**

A separator according to an embodiment including: a flow channel comprising flow-channel walls and flow-channel grooves provided between the flow-channel walls; a supply manifold; an exhaust manifold; a supply connection channel connecting one end of the flow channel to the supply manifold; and an exhaust connection channel connecting the other end of the flow channel to the exhaust manifold. The supply connection channel or/and the exhaust connection channel comprise one or more first protrusion-wall groups including first protrusion-walls and one or more second protrusion-wall groups including second protrusion-walls. The first protrusion-walls are aligned in a second direction which is a vertical direction relative to a first direction which is parallel to the flow-channel grooves at the end portion of the flow channel. The second protrusion-walls are aligned in a second direction. The first protrusion-wall groups and the second protrusion-wall groups are aligned in the first direction. The second protrusion-wall groups are offset in the second direction from the first protrusion-wall groups.

## Description

### FIELD

Embodiments described herein relate generally to a separator, an electrochemical cell, a stack, an electrolytic device, and a fuel cell.

### BACKGROUND

In recent years, there has been growing anticipation for renewable energy. Examples of renewable energy include solar power generation, hydroelectric power generation, wind power generation, and geothermal power generation.

In addition, fuel cell power generation and electrolysis for energy conversion are focused for decarbonization.

### BRIEF DESCRIPTION OF THE DRAWINGS

FIG. 1 is a schematic diagram of a separator according to an embodiment;
FIG. 2 is a partial schematic diagram of a separator according to an embodiment;
FIG. 3 is a partial schematic diagram of a separator according to an embodiment;
FIG. 4 is a partial schematic diagram of a separator according to an embodiment;
FIG. 5 is a partial schematic diagram of a separator according to an embodiment;
FIG. 6 is a partial schematic diagram of a separator according to an embodiment;
FIG. 7 is a partial schematic diagram of a separator according to an embodiment;
FIG. 8 is a schematic diagram of an electrochemical cell according to an embodiment;
FIG. 9 is a schematic diagram of a stack according to an embodiment; and
FIG. 10 is a schematic diagram of an apparatus according to an embodiment.

### DETAILED DESCRIPTION

A separator according to an embodiment including: a flow channel comprising flow-channel walls and flow-channel grooves provided between the flow-channel walls; a supply manifold; an exhaust manifold; a supply connection channel connecting one end of the flow channel to the supply manifold; and an exhaust connection channel connecting the other end of the flow channel to the exhaust manifold. The supply connection channel or/and the exhaust connection channel comprise one or more first protrusion-wall groups including first protrusion-walls and one or more second protrusion-wall groups including second protrusion-walls. The first protrusion-walls are aligned in a second direction which is a vertical direction relative to a first direction which is parallel to the flow-channel grooves at the end portion of the flow channel. The second protrusion-walls are aligned in a second direction. The first protrusion-wall groups and the second protrusion-wall groups are aligned in the first direction. The second protrusion-wall groups are offset in the second direction from the first protrusion-wall groups.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

The thickness and structure of members described in the specification can be known, for example, from one or more of images obtained by SEM (Scanning Electron Microscope), TEM (Transmission Electron Microscope), HAADF-STEM: High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials contained in the members described in the specification (crystal defects, bonding states, etc.) can be evaluated from HAADF-STEP, PL (Photoluminescence), XPS (X-ray Photoelectron Spectroscopy), or the like. These analysis methods are examples and do not negate the specific analytical methods described in the specification.

### (FIRST EMBODIMENT)

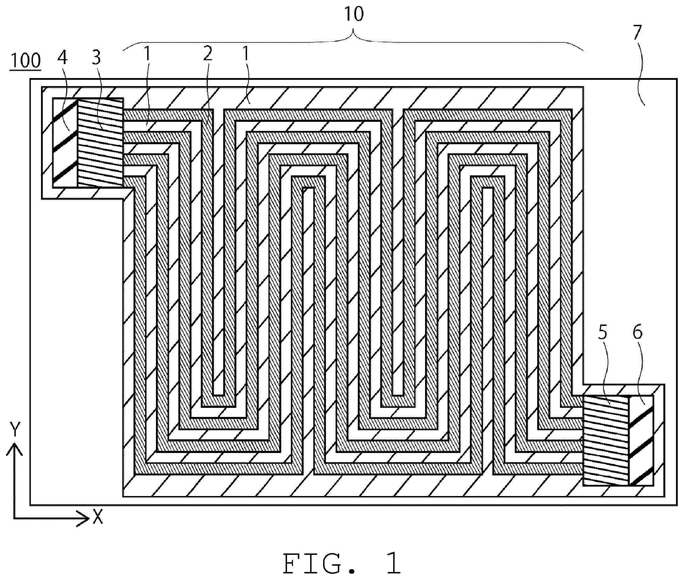

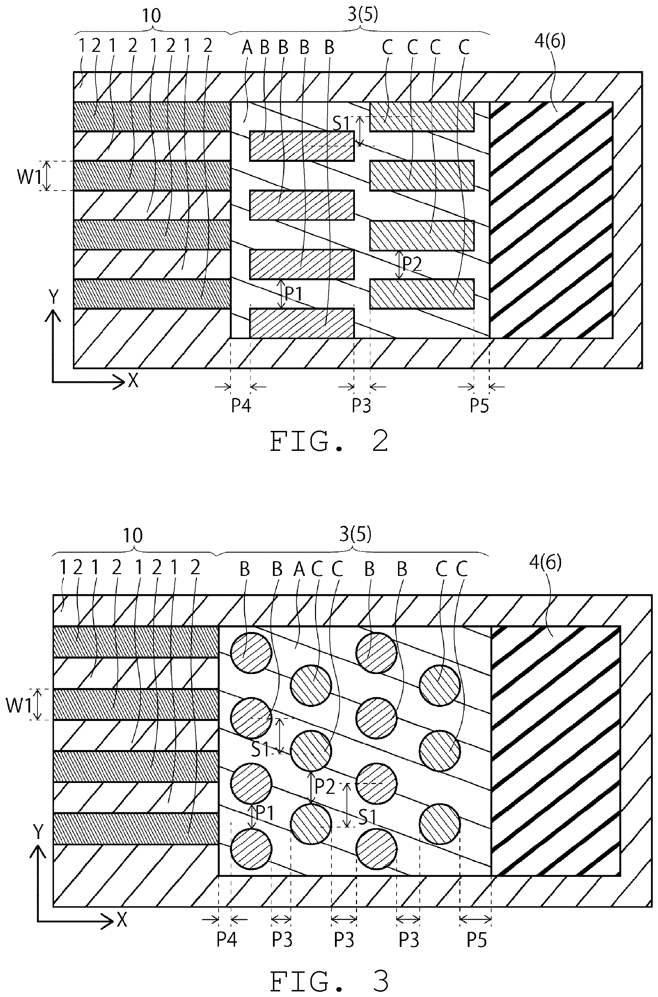

A first embodiment relates to a separator 100. FIG. 1 shows a schematic diagram of the separator 100 according to this embodiment. FIGS. 2 to 4 show partial schematic diagrams of the separator 100. The separator 100 comprises a flow channel 10, a supply manifold 4, an exhaust manifold 6, a supply connection channel 3, and an exhaust connection channel 5. The flow channel 10, the supply manifold 4, the exhaust manifold 6, the supply connection channel 3, and the discharge connecting channel 5 are provided on a frame 7 of the separator 100.

The separator 100 according to the first embodiment can be used, for example, in electrochemical cells such as fuel cells or electrolytic devices. The separator 100 supplies a fluid used for electrode reactions and discharges a fluid containing products of the electrode reactions. The fluids are gas and/or liquid. When the fluid discharged from the exhaust manifold 6 includes both gas and liquid, the pressure loss of the separator 100 can be effectively suppressed.

The separator 100 includes a flow channel 10 comprising flow-channel walls 1 and flow-channel grooves 2 provided between the flow-channel walls 1. The flow-channel wall 1 may surround the supply manifold 4, the exhaust manifold 6, the supply connection channel 3, and the exhaust connection channel 5.

The region sandwiched between the flow-channel walls 1 is the flow-channel groove 2. The flow-channel walls 1 may be, for example, higher level portions of metal members provided on the frame 7, or the flow-channel grooves 2 may be lower level portions provided on the metal members provided on the frame 7. Fluid flows through the flow channel 10. The flow channel 10 preferably has a plurality of flow-channel grooves 2, and it is preferable for the fluid to flow through a plurality of flow-channel grooves 2. In order for the fluid to flow across the entire porous layer of the electrode in direct contact with the separator 100 with little gaps, the flow channel 10 preferably has a serpentine flow channel shape, as shown in the schematic diagram of FIG. 1, for example.

The frame 7 is preferably insulating and composed of a resin material, for example.

The pitch of the flow-channel grooves 2 is preferably 0.1 [mm] or more and 5 [mm] or less, more preferably 0.3 [mm] or more and 3 [mm] or less, and even more preferably 0.5 [mm] or more and 2.5 [mm] or less.

The supply connection channel 3 is provided between the supply manifold 4 and the flow channel 10. The supply connection channel 3 is a flow channel that connects the supply manifold 4 and one end of the flow channel 10. Fluid passing through the supply connection channel 3 in the first direction X flows through the flow channel 10 in the first direction X. The supply connection channel 3 may be a recess-protrusion portion of the frame 7, or it may be composed of a separate member from the frame 7. The first direction X is along the bottom surface A of the supply connection channel 3 and parallel to the flow-channel groove 2 at the end portion of the flow channel 10 connected to the supply connection channel 3. The first direction X is also the direction in which fluid passes from the supply connection channel 3 to the supply manifold 4.

The supply manifold 4 is an opening of the separator 100. Fluid is supplied from the supply manifold 4. Other manifolds not shown in the figure may be provided on the separator 100.

The exhaust connection channel 5 is provided between the exhaust manifold 6 and the flow channel 10. The exhaust connection channel 5 is a flow channel that connects the exhaust manifold 6 and the other end of the flow channelthe flow channel 10. Fluid passing in the first direction X through the flow channel 10 and then through the exhaust connection channel 5 is discharged from the exhaust manifold 6. The exhaust connection channel 5 may be a recess-protrusion portion of the frame 7, or it may be composed of a separate member from the frame 7. The first direction X is along the bottom surface A of the exhaust connection channel 5 and parallel to the flow-channel groove 2 at the end portion of the flow channel 10 connected to the exhaust connection channel 5. The first direction X is also the direction in which fluid passes from the exhaust connection channel 5 to exhaust manifold 6.

The exhaust manifold 6 is an opening of the separator 100. Fluid is discharged from the exhaust manifold 6.

Referring to FIGS. 2 to 4, which are partial schematic cross-sectional diagrams of the separator 100, the separator 100 including the supply connection channel 3 and the exhaust connection channel 5 will be described below.

One or more first protrusion-wall groups including first protrusion-walls (protrusions extend from a bottom surface A) B and one or more second protrusion-wall groups including second protrusion-walls (protrusions extend from the bottom surface A) C are provided in the supply connection channel 3 or/and the exhaust connection channel 5. The supply connection channel 3 or the exhaust connection channel 5 where neither the first protrusion-wall groups nor the second protrusion-wall groups is not provided includes grooves, for example, which is parallel to the flow-channel grooves at the end of the flow channel 10.

The first protrusion-walls B and the second protrusion-walls C are provided on the bottom surface A (e.g., the surface of the frame 7) of the supply connection channel 3 or/and the exhaust connection channel 5. The first protrusion-walls B and the second protrusion-walls C may be integrated with the bottom surface A of the supply connection channel 3 or/and the exhaust connection channel 5, or they may be adhered to the bottom surface A of the supply connection channel 3 or/and the exhaust connection channel 5 via an adhesive layer.

The heights of the first protrusion-walls B and the second protrusion-walls C are preferably 80% or more and 120% or less of the height of the flow-channel walls 1. When the heights of the first protrusion-walls B and the second protrusion-walls C are too low, the support of the electrode in (direct) contact with the separator 100 is likely to deform easily. On the other hand, when the heights of the first protrusion-walls B and the second protrusion-walls C are too high, it may become difficult to apply clamping force to the support of the electrode in (direct) contact with the separator 100.

The first protrusion-walls B are preferably aligned in the second direction Y which is a vertical direction relative to the first direction X. The first protrusion-walls B of one of the first protrusion-wall groups are arranged in a single row along the second direction Y. The second direction Y is parallel to the bottom surface A of the supply connection channel 3 and the exhaust connection channel 5.

The first protrusion-walls B are spaced apart in the second direction Y with a spacing P1. The spacing P1 represents the distance between adjacent first protrusion-walls B. The first protrusion-walls B are preferably arranged with equal or approximately equal spacing. In some cases, the distance between the flow-channel walls 1 and the first protrusion-walls B located at the end of the second direction Y and not in (direct) contact with the flow-channel walls 1 may also be considered as the spacing P1.

The average value of the spacing P1 is preferably 0.1 [mm] or more and 5 [mm] or less, more preferably 0.3 [mm] or more and 3 [mm] or less, and even more preferably 0.5 [mm] or more and 2.5 [mm] or less.

The second protrusion-walls C are preferably aligned in the second direction Y which is a vertical direction relative to the first direction X, which is parallel to the flow-channel grooves 2 at the end of the flow channel 10. The second protrusion-walls C of one of the second protrusion-wall groups are arranged in a single row along the second direction Y.

The third direction is perpendicular to both the first direction X and the second direction Y. The lengths of the flow-channel walls 1, the first protrusion-walls B, and the second protrusion-walls C are their respective lengths in the third direction. The vertical elastic modulus in the third direction of the first protrusion-walls B and the second protrusion-walls C is preferably 2.5 [GPa] or more. The vertical elastic modulus can be determined, for example, by the resonance method. When the vertical elastic modulus of the first protrusion-walls B and the second protrusion-walls C is low, the strength of the separator 100 may also be low, and there is a possibility that the supply connection channel 3 or the exhaust connection channel 5 may be damaged when the electrochemical cell is tightened and fixed. Therefore, the vertical elastic modulus in the third direction of the first protrusion-walls B and the second protrusion-walls C is preferably 2.5 [GPa] or more, more preferably 5 [GPa] or more, and even more preferably 50 [GPa] or more.

When the vertical elastic modulus in the third direction of the first protrusion-walls B and the second protrusion-walls C is 2.5 [GPa] or more, the materials for the first protrusion-walls B and the second protrusion-walls C are preferably metal, resin, fiber-reinforced metal, or fiber-reinforced resin. For the first protrusion-walls B and the second protrusion-walls C, aluminum, copper, or stainless steel is preferable as a metal. For the first protrusion-walls B and the second protrusion-walls C, POM (polyoxymethylene), PPS (polyphenylene sulfide), or PEEK (polyetheretherketone) is preferable as a resin. For the first protrusion-walls B and the second protrusion-walls C as fiber-reinforced metal, those protrusion-walls in which aluminum is used as a base material combined with alumina-silica (Al2O₃·SiO₂) fibers for reinforcement are preferable. Boron fiber-reinforced aluminum or silicon carbide fiber-reinforced aluminum is also preferable for the first protrusion-walls B and the second protrusion-walls C. For the first protrusion-walls B and the second protrusion-walls C as fiber-reinforced resin, glass epoxy resin, glass fiber-reinforced plastic other than glass epoxy resin, or carbon fiber-reinforced plastic are preferable. When conductive materials are used for the first protrusion-walls B and the second protrusion-walls C, the first protrusion-walls B and the second protrusion-walls C are preferably insulated from the flow channel 10.

The vertical elastic modulus in the third direction of the first protrusion-walls B and the second protrusion-walls C is preferably 125% to 10000% of the vertical elastic modulus in the third direction of the flow-channel walls 1. To meet this relationship, the materials for the flow-channel walls 1 are preferably metal, resin, fiber-reinforced metal, or fiber-reinforced resin. For the metal of the flow-channel walls 1, aluminum, copper, or stainless steel is preferable. For the resin of the flow-channel walls 1, POM, PPS, or PEEK is preferable. For the fiber-reinforced metal of the flow-channel walls 1, a material in which aluminum is used as a base material combined with alumina-silica (Al₂O₃·SiO₂) fibers, boron fiber-reinforced aluminum or silicon carbide fiber-reinforced aluminum is preferable. For the fiber-reinforced resin of the flow-channel walls 1, glass epoxy resin, glass fiber-reinforced plastic other than glass epoxy resin, or carbon fiber-reinforced plastic is preferable.

The second protrusion-walls C are aligned along the second direction Y with distance of a spacing P2. The spacing P2 is the distance between adjacent second protrusion-walls C. The second protrusion-walls C is preferably arranged with the same spacing or substantially the same spacing. The distance between the second protrusion-walls C located at the end of the second direction Y and not in (direct) contact with the flow-channel walls 1 and the flow-channel walls 1 may also be considered as the spacing P2.

The average value of the spacing P2 is preferably 0.1 [mm] or more and 5 [mm] or less, more preferably 0.3 [mm] or more and 3 [mm] or less, and even more preferably 0.5 [mm] or more and 2.5 [mm] or less.

The second protrusion-wall groups are preferably offset in the second direction Y from the first protrusion-wall groups. Preferably, the second protrusion-wall groups and the first protrusion-wall groups, aligned in the first direction X are offset in the second direction Y. When the second protrusion-wall groups and the first protrusion-wall groups are offset in the second direction Y, the fluid passing between the first protrusion-walls B branches into two directions and passes between the second protrusion-walls C, which is preferable.

The amount of offset S1 of the second protrusion-wall groups from the first protrusion-wall groups in the second direction Y is represented by S1 in FIG. 2 and FIG. 3. The offset S1 of the second protrusion-wall groups from the first protrusion-wall groups in the second direction Y is the average value of the distance in the second direction Y from the center of the first protrusion-wall B to the center of the second protrusion-wall C adjacent to the first protrusion-wall B.

The offset S1 of the second protrusion-wall groups from the first protrusion-wall groups in the second direction Y is preferably 0.1 times or more and 1 time or less of the average value of the spacing P1, more preferably 0.3 times or more and 1 time or less, and even more preferably 0.6 times or more and 1 time or less.

For example, when gas passes between the protrusion-walls of the supply connection channel 3 and/or the exhaust connection channel 5, and even when the space between the protrusion-walls is blocked by the gas, since there are multiple paths ahead between the protrusion-walls, it becomes easier for the fluid to flow from other paths. By reducing bias in the fluid flow, pressure loss between the supply manifold 4 and the exhaust manifold 6 can be reduced.

From the viewpoint of reducing bias in fluid flow, the variation in the size of the spacing P1 of the first protrusion-walls B is preferably small. The first protrusion-walls B are preferably aligned with equal or substantially equal spacing in the second direction Y. The maximum value of the spacing P1 is preferably 1.05 times or more and 2 times or less of the average value of the spacing P1, more preferably 1.05 times or more and 1.3 times or less, and even more preferably 1.05 times or more and 1.1 times or less.

From the viewpoint of reducing bias in fluid flow, the variation in the size of the spacing P1 of the first protrusion-walls B is preferably small. The first protrusion-walls B are preferably aligned with equal or substantially equal spacing in the second direction Y. The minimum value of the spacing P1 is preferably 0.5 times or more and 0.95 times or less of the average value of the spacing P1, more preferably 0.7 times or more and 0.95 times or less, and even more preferably 0.9 times or more and 0.95 times or less.

From the viewpoint of reducing bias in fluid flow, the average value of the spacing P1 is preferably 0.02 times or more and 50 times or less of the average value of the width W1 of the flow-channel grooves 2, more preferably 0.1 times or more and 11 times or less, and even more preferably 1 time or more and 1.1 times or less.

From the viewpoint of reducing bias in fluid flow, the length of the first protrusion-walls B in the second direction Y is preferably 0.02 times or more and 50 times or less of the average value of the width W1 of the flow-channel grooves 2, more preferably 0.1 times or more and 11 times or less, and even more preferably 1 time or more and 1.1 times or less.

From the viewpoint of reducing bias in fluid flow, the variation in the size of the spacing P2 of the second protrusion-walls C is preferably small. The second protrusion-walls C is preferably aligned with equal or substantially equal spacing in the second direction Y. The maximum value of the spacing P2 is preferably 1.05 times or more and 2 times or less of the average value of the spacing P2, more preferably 1.05 times or more and 1.3 times or less, and even more preferably 1.05 times or more and 1.1 times or less.

From the viewpoint of reducing bias in fluid flow, the variation in the size of the spacing P1 of the second protrusion-walls C is preferably small. The second protrusion-walls C is preferably aligned with equal or substantially equal spacing in the second direction Y. The minimum value of the spacing P1 is preferably 0.5 times or more and 0.95 times or less of the average value of the spacing P1, more preferably 0.7 times or more and 0.95 times or less, and even more preferably 0.9 times or more and 0.95 times or less.

From the viewpoint of reducing bias in fluid flow, the average value of the spacing P2 is preferably 0.02 times or more and 50 times or less of the average value of the width W1 of the flow-channel grooves 2, more preferably 0.1 times or more and 11 times or less, and even more preferably 1 time or more and 1.1 times or less.

From the viewpoint of reducing bias in fluid flow, the length of the second protrusion-walls C in the second direction Y is preferably 0.02 times or more and 50 times or less of the average value of the width W1 of the flow-channel grooves 2, more preferably 0.1 times or more and 11 times or less, and even more preferably 1 time or more and 1.1 times or less.

The length of the first protrusion-walls B in the second direction Y is preferably 0.02 times or more and 50 times or less of the average value of spacing P1, more preferably 0.1 times or more and 11 times or less, and even more preferably 1 time or more and 1.1 times or less.

The first protrusion-walls B shown in the schematic diagram of FIG. 2 preferably have the first direction X as the longitudinal direction. The length of the first protrusion-walls B in the second direction Y is preferably 0.01 times or more and 10 times or less of the length of the first protrusion-walls B in the first direction X, more preferably 0.1 times or more and 2 times or less, and even more preferably 0.9 times or more and 1 time or less.

The first protrusion-walls B shown in the schematic diagram of FIG. 3 are cylindrical. The length of the first protrusion-walls B in the second direction Y is preferably 0.01 times or more and 10 times or less of the length of the first protrusion-walls B in the first direction X, more preferably 0.1 times or more and 2 times or less, and even more preferably 0.9 times or more and 1 time or less.

The length of the second protrusion-walls C in the second direction Y is preferably 0.02 times or more and 50 times or less of the average value of spacing P2, more preferably 0.1 times or more and 11 times or less, and even more preferably 1 time or more and 1.1 times or less.

The second protrusion-walls C shown in the schematic diagram of FIG. 2 have the first direction X as the longitudinal direction, preferably. The length of the second protrusion-walls C in the second direction Y is preferably 0.01 times or more and 10 times or less of the length of the second protrusion-walls C in the first direction X, more preferably 0.1 times or more and 2 times or less, and even more preferably 0.9 times or more and 1 time or less.

The second protrusion-walls C shown in the schematic diagram of FIG. 3 are cylindrical. The length of the second protrusion-walls C in the second direction Y is preferably 0.01 times or more and 10 times or less of the length of the second protrusion-walls C in the first direction X, more preferably 0.1 times or more and 2 times or less, and even more preferably 0.9 times or more and 1 time or less.

The average value of spacing P1 is preferably 0.3 times or more and 2 times or less of the average value of spacing P2, more preferably 0.5 times or more and 1.5 times or less, and even more preferably 0.9 times or more and 1.1 times or less.

Preferably, a gap P3 exists between the first protrusion-wall groups and the second protrusion-wall groups where flow channels of the first protrusion-wall groups and the second protrusion-wall groups converge. In other words, the first protrusion-wall groups and the second protrusion-wall groups are preferably separated.

The average value of the gap P3 is preferably 0.3 times or more and 2 times or less of the average value of spacing P1, more preferably 0.5 times or more and 1.5 times or less, and even more preferably 0.9 times or more and 1.1 times or less.

The average value of the gap P3 is 0.3 times or more and 2 times or less of the average value of spacing P2, more preferably 0.5 times or more and 1.5 times or less, and even more preferably 0.9 times or more and 1.1 times or less.

Preferably a gap P4 exists between the flow channel 10 and the first protrusion-wall group located closest to the flow channel 10. The gap P4 is preferably 0.3 times or more and 2 times or less of the average value of spacing P1, more preferably 0.5 times or more and 1.5 times or less, and even more preferably 0.9 times or more and 1.1 times or less.

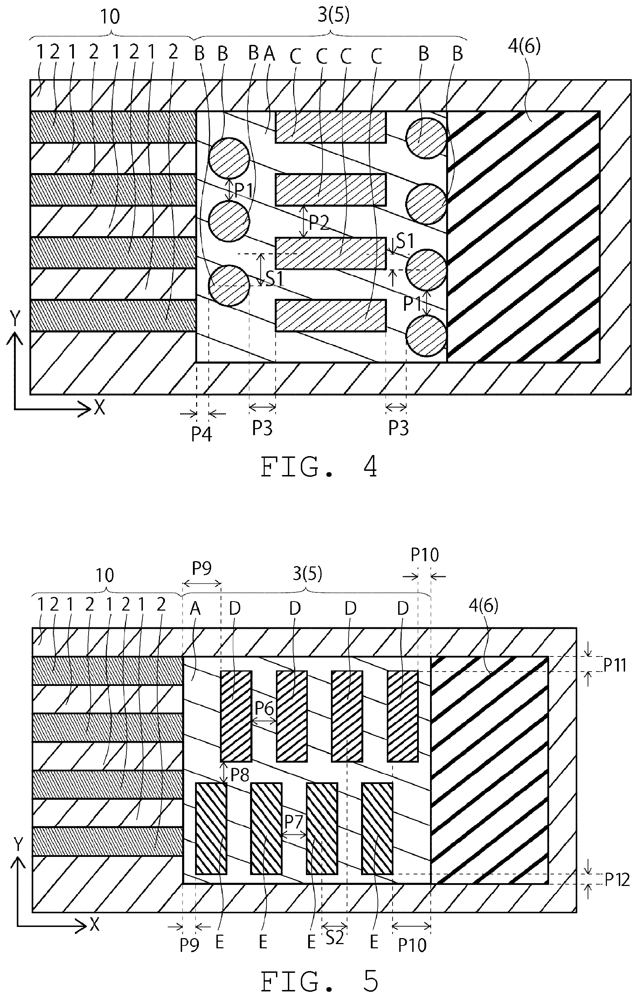

A gap P5 may exist between the supply manifold 4 and/or the exhaust manifold 6 and the first protrusion-wall groups or the second protrusion-wall groups located closest to the supply manifold 4 and/or the exhaust manifold 6, as shown in the schematic diagram of FIG. 4, or the gap P5 may not exist. The gap P5 is preferably 2 times or less of the average value of spacing P1, more preferably 1.5 times or less, and even more preferably 1.1 times or less.

The first protrusion-wall groups and the second protrusion-wall groups are preferably alternately arranged in the first direction X. Preferably, the first protrusion-wall groups and the second protrusion-wall groups are alternately arranged rather than being lined up continuously. As shown in the schematic diagram of FIG. 3, the first protrusion-wall groups and the second protrusion-wall groups is alternately repeated in the first direction, preferably.

As shown in the schematic diagram of FIG. 4, when multiple first protrusion-wall groups are included in the supply connection channel 3 and/or the exhaust connection channel 5, or multiple second protrusion-wall groups are included in the supply connection channel 3 and/or the exhaust connection channel 5, the shape, spacing, and gap of each first protrusion-wall groups and/or second protrusion-wall groups may be the same or different.

As shown in the schematic diagram of FIG. 4, the first protrusion-walls B and the second protrusion-walls C may have different shapes.

In FIG. 2, some portions of the first protrusion-walls B and some portions of the second protrusion-walls C are in (direct) contact with the flow-channel walls 1; however, depending on the configuration of the flow-channel walls 1 and the flow-channel grooves 2, whether some portions of the first protrusion-walls B and some portions of the second protrusion-walls C are in (direct) contact with the flow-channel walls 1 can be arbitrarily designed.

### (SECOND EMBODIMENT)

A second embodiment relates to a separator 100. The second embodiment is a variation of the first embodiment. The description of common content between the first embodiment and the second embodiment will be omitted. Partial schematic diagrams of the separator 100 according to the second embodiment are shown in FIGS. 5 to 7.

One or more third protrusion-wall groups including third protrusion-walls (protrusions extend from a bottom surface A) D and one or more fourth protrusion-wall groups including fourth protrusion-walls (protrusions extend from the bottom surface A) E are provided in the supply connection channel 3 or/and the exhaust connection channel 5. The supply connection channel 3 or the exhaust connection channel 5 where neither the third protrusion-wall groups nor the fourth protrusion-wall groups is not provided includes grooves, for example, which is parallel to the flow-channel grooves at the end of the flow channel 10. The third protrusion-wall groups and the fourth protrusion-wall groups are located on the flow channel 10 side.

The third protrusion-walls D and the fourth protrusion-walls E are provided on the bottom surface A (for example, the surface of the frame 7) of the supply connection channel 3 and/or the exhaust connection channel 5. The third protrusion-walls D and the fourth protrusion-walls E may be integrated with the bottom surface A of the supply connection channel 3 and/or the exhaust connection channel 5, or they may be adhered to the bottom surface A of the supply connection channel 3 and/or the exhaust connection channel 5 via an adhesive layer.

The third protrusion-walls D are preferably aligned in the first direction X. The third protrusion-walls D of one of the third protrusion-wall groups are arranged in a row in the first direction X.

The third protrusion-walls D are aligned in the first direction X with a spacing P6. The spacing P6 is the distance between adjacent third protrusion-walls D. The third protrusion-walls D are preferably arranged with equal spacing or approximately equal spacing.

The average value of the spacing P6 is preferably 0.1 [mm] or more and 5 [mm] or less, more preferably 0.3 [mm] or more and 3 [mm] or less, and even more preferably 0.5 [mm] or more and 2.5 [mm] or less.

The fourth protrusion-walls E is preferably aligned in the first direction X. The fourth protrusion-walls E of one of the fourth protrusion-wall groups are arranged in a row in the first direction X.

The fourth protrusion-walls E are aligned in the first direction X with a spacing P7. The spacing P7 is the distance between adjacent fourth protrusion-walls E. The fourth protrusion-walls E are preferably arranged with equal spacing or approximately equal spacing.

The average value of the spacing P7 is preferably 0.1 [mm] or more and 5 [mm] or less, more preferably 0.3 [mm] or more and 3 [mm] or less, and even more preferably 0.5 [mm] or more and 2.5 [mm] or less.

The third protrusion-wall groups and the fourth protrusion-wall groups are preferably aligned in the second direction Y with a gap P8.

The height of the third protrusion-walls D and the fourth protrusion-walls E is the length of the third protrusion-walls D and the fourth protrusion-walls E in the third direction. The vertical elastic modulus in the third direction of the third protrusion-walls D and the fourth protrusion-walls E is preferably 2.5 [GPa] or more. When the vertical elastic modulus in the third direction of the third protrusion-walls D and the fourth protrusion-walls E is low, the strength of the separator 100 may be low, and there is a possibility that the supply connection channel 3 or the exhaust connection channel 5 may be damaged when the electrochemical cell is tightened and fixed. Therefore, the vertical elastic modulus in the third direction of the third protrusion-walls D and the fourth protrusion-walls E is preferably 2.5 [GPa] or more, more preferably 5 [GPa] or more, and even more preferably 50 [GPa] or more.

Materials for the third protrusion-walls D and the fourth protrusion-walls E with a vertical elastic modulus in the third direction of 2.5 [GPa] or more are preferably metals, resins, metal matrix composites, or fiber-reinforced resins. For the third protrusion-walls D and the fourth protrusion-walls E, aluminum, copper, or stainless steel is preferable as a metal. For the third protrusion-walls D and the fourth protrusion-walls E, POM (polyoxymethylene), PPS (polyphenylene sulfide), or PEEK (polyetheretherketone) is preferable as a resin. For the third protrusion-walls D and the fourth protrusion-walls E, as fiber-reinforced metal, those protrusion-walls in which aluminum is used as a base material combined with alumina-silica (Al2O3·SiO2) fibers for reinforcement are preferable. Boron fiber-reinforced aluminum or silicon carbide fiber-reinforced aluminum is also preferable for the third protrusion-walls D and the fourth protrusion-walls E. For the third protrusion-walls D and the fourth protrusion-walls E as fiber-reinforced resin, glass epoxy resin, glass fiber-reinforced plastic other than glass epoxy resin, or carbon fiber-reinforced plastic are preferable. When conductive materials are used for the third protrusion-walls D and the fourth protrusion-walls E, the third protrusion-walls D and the fourth protrusion-walls E are preferably insulated from the flow channel 10.

The vertical elastic modulus in the third direction of the third protrusion-walls D and the fourth protrusion-walls E is preferably 125% to 10000% of the vertical elastic modulus in the third direction of the flow-channel walls 1. To meet this relationship, the materials for the flow-channel walls 1 are preferably metal, resin, fiber-reinforced metal, or fiber-reinforced resin. For the metal of the flow-channel walls 1, aluminum, copper, or stainless steel is preferable. For the resin of the flow-channel walls 1, POM, PPS, or PEEK is preferable. For the fiber-reinforced metal of the flow-channel walls 1, a material in which aluminum is used as a base material combined with alumina-silica (Al₂O₃·SiO₂) fibers, boron fiber-reinforced aluminum or silicon carbide fiber-reinforced aluminum is preferable. For the fiber-reinforced resin of the flow-channel walls 1, glass epoxy resin, glass fiber-reinforced plastic other than glass epoxy resin, or carbon fiber-reinforced plastic is preferable.

Preferably, a gap P8 exists where the flow channel of the third protrusion-wall groups and the flow channel of the fourth protrusion-wall groups converge. Therefore, the third protrusion-wall groups and the fourth protrusion-wall groups are preferably separated in the second direction Y.

Preferably, the fourth protrusion-wall groups are offset in the first direction X from the third protrusion-wall groups. Preferably, the fourth protrusion-wall groups aligned in the first direction X are offset from the third protrusion-wall groups. When the fourth protrusion-wall groups and the third protrusion-wall groups are offset in the first direction X, fluid that has passed through the third protrusion-walls D can branch into multiple directions and pass between the fourth protrusion-walls E.

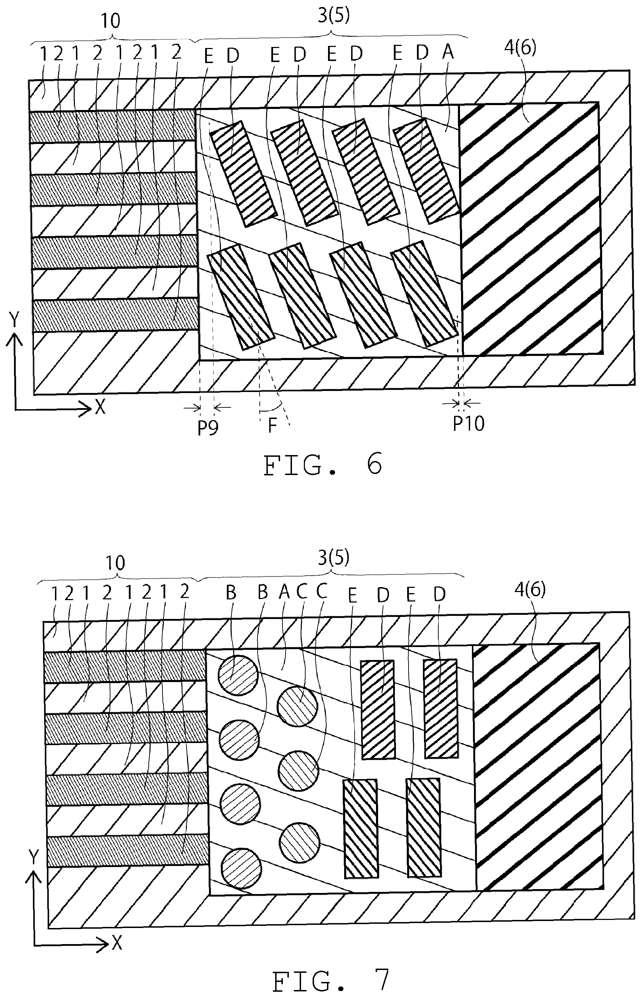

In FIGS. 5 and 6, the offset amount S2 of the fourth protrusion-wall groups from the third protrusion-wall groups in the first direction X is represented. The offset amount S2 of the fourth protrusion-wall groups relative to the third protrusion-wall groups in the first direction X is the average value of the distance in the first direction X from the center of the third protrusion-walls D to the center of the fourth protrusion-walls E adjacent to the third protrusion-walls D.

The offset amount S1 of the fourth protrusion-wall groups relative to the third protrusion-wall groups in the first direction X is preferably 0.1 times or more and 1 time or less of the spacing P6, more preferably 0.3 times or more and 1 time or less, and even more preferably 0.6 times or more and 1 time or less.

For example, when gas passes between the protrusion-walls of the supply connection channel 3 and/or the exhaust connection channel 5, even when the space between the protrusion-walls is blocked by the gas, there are multiple paths ahead of a certain protrusion-wall, making it easier for fluid to flow from other paths. By reducing the bias in fluid flow, the pressure loss from the supply manifold 4 to the exhaust manifold 6 can be reduced.

From the viewpoint of reducing the bias in fluid flow, the variation in the size of the spacing P6 of the third protrusion-walls D is preferably small. The third protrusion-walls D are preferably arranged with equal spacing or approximately equal spacing in the first direction X, and the maximum value of the spacing P6 is preferably 1.05 times or more and 2 times or less of the average value of the spacing P6, more preferably 1.05 times or more and 1.3 times or less, and even more preferably 1.05 times or more and 1.1 times or less.

From the viewpoint of reducing the bias in fluid flow, the variation in the size of spacing P6 of the third protrusion-walls D is preferably small. The third protrusion-walls D is preferably arranged with equal spacing or approximately equal spacing in the first direction X, and the minimum value of the spacing P6 is preferably 0.5 times or more and 0.95 times or less of the average value of the spacing P6, more preferably 0.7 times or more and 0.95 times or less, and even more preferably 0.9 times or more and 0.95 times or less.

From the viewpoint of reducing the bias in fluid flow, the average value of the spacing P6 is preferably 0.02 times or more and 50 times or less of the average value of the width W1 of the flow-channel grooves 2, more preferably 0.1 times or more and 11 times or less, and even more preferably 1 time or more and 1.1 times or less.

From the viewpoint of reducing the bias in fluid flow, the length of the third protrusion-walls D in the first direction X is preferably 0.02 times or more and 50 times or less of the average value W1 of the width of the flow-channel grooves 2, more preferably 0.1 times or more and 11 times or less, and even more preferably 1 time or more and 1.1 times or less.

From the viewpoint of reducing the bias in fluid flow, the variation in the size of the spacing P7 of the fourth protrusion-walls E is preferably small. The fourth protrusion-walls E is preferably arranged with equal spacing or approximately equal spacing in the first direction X, and the maximum value of the spacing P7 is preferably 1.05 times or more and 2 times or less of the average value of the spacing P7, more preferably 1.05 times or more and 1.3 times or less, and even more preferably 1.05 times or more and 1.1 times or less.

From the viewpoint of reducing the bias in fluid flow, the variation in the size of the spacing P7 of the fourth protrusion-walls E is preferably small. The fourth protrusion-walls E is preferably arranged with equal spacing or approximately equal spacing in the first direction X, and the minimum value of the spacing P7 is preferably 0.5 times or more and 0.95 times or less of the average value of the spacing P7, more preferably 0.7 times or more and 0.95 times or less, and even more preferably 0.9 times or more and 0.95 times or less.

From the viewpoint of reducing the bias in fluid flow, the average value of the spacing P7 is preferably 0.02 times or more and 50 times or less of the average value of the width W1 of the flow-channel grooves 2, more preferably 0.1 times or more and 11 times or less, and even more preferably 1 time or more and 1.1 times or less.

From the viewpoint of reducing the bias in fluid flow, the length of the fourth protrusion-walls E in the first direction X is preferably 0.02 times or more and 50 times or less of the average value of the width W1 of the flow-channel grooves 2, more preferably 0.1 times or more and 11 times or less, even more preferably 1 time or more and 1.1 times or less.

The length of the third protrusion-walls D in the first direction X is preferably 0.01 times or more and 10 times or less of the average value of spacing P6, more preferably 0.1 times or more and 2 times or less, and even more preferably 0.9 times or more and 1 time or less.

From the viewpoint of reducing the bias in fluid flow, the length of the third protrusion-walls D in the second direction Y is preferably 1.1 times or more and 6 times or less of the length of the third protrusion-walls D in the first direction, more preferably 1.2 times or more and 4 times or less, and even more preferably 1.3 times or more and 3.5 times or less, even more preferably 1.5 times or more and 3.5 times or less.

The length of the fourth protrusion-walls E in the first direction X is preferably 0.01 times or more and 10 times or less of the average value of the spacing P7, more preferably 0.1 times or more and 2 times or less, and even more preferably 0.9 times or more and 1 time or less.

From the viewpoint of reducing the bias in fluid flow, the length of the fourth protrusion-walls E in the second direction Y is preferably 1.1 times or more and 6 times or less of the length of the fourth protrusion-walls E in the first direction, more preferably 1.2 times or more and 4 times or less, even more preferably 1.3 times or more and 3.5 times or less, and even more preferably 1.5 times or more and 3.5 times or less.

The average value of the spacing P6 is preferably 0.3 times or more and 2 times or less of the average value of the spacing P7, more preferably 0.5 times or more and 1.5 times or less, and even more preferably 0.9 times or more and 1.1 times or less.

The average value of the gap P8 is preferably 0.3 times or more and 2 times or less of the average value of the spacing P6, more preferably 0.5 times or more and 1.5 times or less, and even more preferably 0.9 times or more and 1.1 times or less.

The average value of the gap P8 is preferably 0.3 times or more and 2 times or less of the average value of the spacing P7, more preferably 0.5 times or more and 1.5 times or less, and even more preferably 0.9 times or more and 1.1 times or less.

Preferably, there is a gap P9 between the third protrusion-wall groups or the fourth protrusion-wall groups located closest to the flow channels 10 and that flow channel 10. The gap P9 of the third protrusion-wall groups located closest to the flow channel 10 and that flow channel 10 is preferably 0.3 times or more and 2 times or less of the average value of the spacing P6, more preferably 0.5 times or more and 1.5 times or less, and even more preferably 0.9 times or more and 1.1 times or less. The gap P9 of the fourth protrusion-wall groups located closest to the flow channel 10 and that flow channel 10 is preferably 0.3 times or more and 2 times or less of the average value of the spacing P7, more preferably 0.5 times or more and 1.5 times or less, and even more preferably 0.9 times or more and 1.1 times or less.

There may be the gap P10 between the third protrusion-wall groups or the fourth protrusion-wall groups located closest to the supply manifold 4 or the exhaust manifold 6 and that supply manifold 4 or that exhaust manifold 6, as shown in the schematic diagram of FIG. 6. Otherwise, the gap P10 may not be present. The gap P10 is preferably 2 times or less of the average value of the spacing P6 for the third protrusion-wall groups located closest to the supply manifold 4 or the exhaust manifold 6 and that supply manifold 4 or that exhaust manifold 6, more preferably 1.5 times or less, and even more preferably 1.1 times or less. The gap P10 is preferably 2 times or less of the average value of the spacing P7 for the fourth protrusion-wall groups located closest to the supply manifold 4 or the exhaust manifold 6, more preferably 1.5 times or less, and even more preferably 1.1 times or less.

The third protrusion-wall groups and the fourth protrusion-wall groups are preferably arranged alternately in the first direction X. The third protrusion-wall groups and the fourth protrusion-wall groups are arranged alternately rather than consecutively.

When multiple third protrusion-wall groups are included in the supply connection channel 3 or/and the exhaust connection channel 5, or/and when multiple fourth protrusion-wall groups are included in the supply connection channel 3 or/and the exhaust connection channel 5, the shape, spacing, and gaps of each third protrusion-wall group or/and fourth protrusion-wall group may be the same or different.

The third protrusion-wall D and the fourth protrusion-wall E may have different shapes.

As shown in the schematic diagram of FIG. 6, the third protrusion-wall D and/or the fourth protrusion-wall E may be inclined with respect to the second direction Y. The inclination direction may be in the +X direction or the -X direction. The angle F at which the third protrusion-wall D and/or the fourth protrusion-wall E are inclined with respect to the second direction Y is preferably ±1° or more and ±89° or less, more preferably ±10° or more and ±60° or less, and even more preferably ±15° or more and ±45° or less.

Preferably, there is a gap P11 between the third protrusion-wall groups and the flow-channel wall 1 in the second direction Y. The gap P11 is the distance in the second direction Y between the third protrusion-wall groups and the flow-channel wall 1 which sandwiches the third protrusion-wall groups and located on the third protrusion-wall groups side.

The average value of the gap P11 is preferably 0.3 times or more and 2 times or less of the average value of spacing P6, more preferably 0.5 times or more and 1.5 times or less, and even more preferably 0.9 times or more and 1.1 times or less.

Preferably, there is a gap P12 between the fourth protrusion-wall groups and the flow-channel wall 1 in the second direction Y. The gap P12 is the distance in the second direction Y between the fourth protrusion-wall groups and the flow-channel wall 1 which sandwiches the fourth protrusion-wall groups and located on the fourth protrusion-wall groups side.

The average value of the gap P12 is preferably 0.3 times or more and 2 times or less of the average value of spacing P7, more preferably 0.5 times or more and 1.5 times or less, and even more preferably 0.9 times or more and 1.1 times or less.

As shown in the schematic diagram of FIG. 7, the supply connection channel 3 and/or the exhaust connection channel 5 of the first embodiment and the supply connection channel 3 and/or the exhaust connection channel 5 of the second embodiment can be combined. In the supply connection channel 3 and/or exhaust connection channel 5 in FIG. 7, the third protrusion-wall groups are aligned in the first direction X with the first protrusion-wall groups and the second protrusion-wall groups, and the fourth protrusion-wall groups are aligned in the first direction X with the first protrusion-wall groups and the second protrusion-wall groups.

### (THIRD EMBODIMENT)

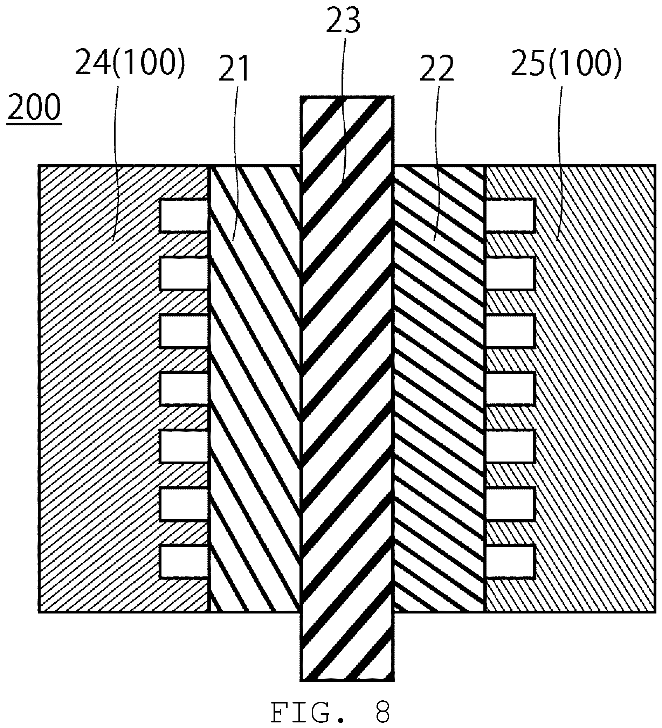

A third embodiment relates to an electrochemical cell. FIG. 8 shows a schematic diagram of an electrochemical cell 200 according to the third embodiment. The electrochemical cell 200 is used for electrolysis or as a fuel cell.

The electrochemical cell 200 comprises an anode 21, a cathode 22, a diaphragm (electrolyte membranes) 23, a first separator 24 on the anode 21 on a side opposite to the diaphragm 23, and a second separator 25 on the cathode 22 on a side opposite to the diaphragm 23.

The anode 21 has a support on the side of the first separator 24 and a catalyst layer on the side of the diaphragm 23. Appropriate materials for the support of the anode 21 and the catalyst layer are selected based on the reaction of the anode 21.

The cathode 22 has a support on the side of the second separator 25 and a catalyst layer on the side of the diaphragm 23. Appropriate materials for the support of the cathode 22 and the catalyst layer are selected based on the reaction of the cathode 22.

The diaphragm 23 is arranged between the anode 21 and the cathode 22. The diaphragm 23 includes, for example, a cation exchange membrane, an anion exchange membrane, or a neutral membrane.

Suitable materials for the diaphragm 23 include one or more selected from a group consisting of sulfonic acid groups, sulfonimide groups, and sulfuric acid groups, such as a fluorinated polymer or an aromatic hydrocarbon polymer, or organic polymeric material. For example, a fluorinated polymer containing sulfonic acid groups is preferable. Examples of fluorinated polymers containing sulfonic acid groups include Nafion (trademark, DuPont), Flemion (trademark, Asahi Kasei Corporation), Celemeix (trademark, Asahi Kasei Corporation), Aquivion (trademark; Solvay Specialty Polymers) or Aciplex (trademark, AGC). Alternatively, various conductive membranes such as anion exchange membranes and porous membranes can be used in place of the proton-conductive membrane.

Examples of organic polymeric materials include poly ether, polysulfone, polyethylene, polypropylene, polyether sulfone, cellulose, and the like.

A porous membrane made of an organic polymer material used for the diaphragm 23 can be manufactured as follows. There are various manufacturing methods for the porous membrane of the organic polymer material, such as phase separation method, melt quenching method, extraction method, chemical treatment method, stretching method, irradiation etching method, melting method, foaming method, double layer method and hollow fiber formation method. The manufacturing method is not particularly limited. Among them, a non-solvent induced phase separation (NIPS) method involves contacting a uniform casting solution of an organic polymer dissolved in a solvent with a coagulant containing a non-solvent to create a concentration gradient between the solvent in the casting solution and the non-solvent in the coagulation bath. This drives the replacement of the solvent in the casting solution by the non-solvent, resulting in phase separation. Otherwise, a manufacturing method utilizing thermal-induced phase separation phenomenon that induces phase separation by cooling a polymer solution dissolved at high temperature is used. For materials like fluorinated resins, which are easy to fiberize, a method of applying shear force to create micro-pores within the membrane can be selected. Furthermore, combining these methods allows for obtaining a predetermined porous structure. The membrane can also be complexed with inorganic materials, or coated to control hydrophilicity on its surface. Layering multiple membranes is also acceptable.

The first separator 24 is used to supply a fluid used in the reaction of the anode 21 and discharge a fluid containing reactants. The first separator 24 is electrically connected to the anode 21. The separator 100 according to the first embodiment or the second embodiment is preferably used for the first separator 24.

The second separator 25 is used to supply a fluid used in the reaction of the cathode 22 and discharge a fluid containing reactants. The second separator 25 is electrically connected to the cathode 22. The separator 100 according to the first embodiment or the second embodiment is preferably used for the second separator 25.

The separator 100 according to the first embodiment or the second embodiment is preferably used for the first separator 24 and/or the second separator 25.

By using the separator 100 according to the first embodiment or the second embodiment, pressure loss is reduced and reaction efficiency at the anode 21 and/or cathode 22 is improved.

### (FOURTH EMBODIMENT)

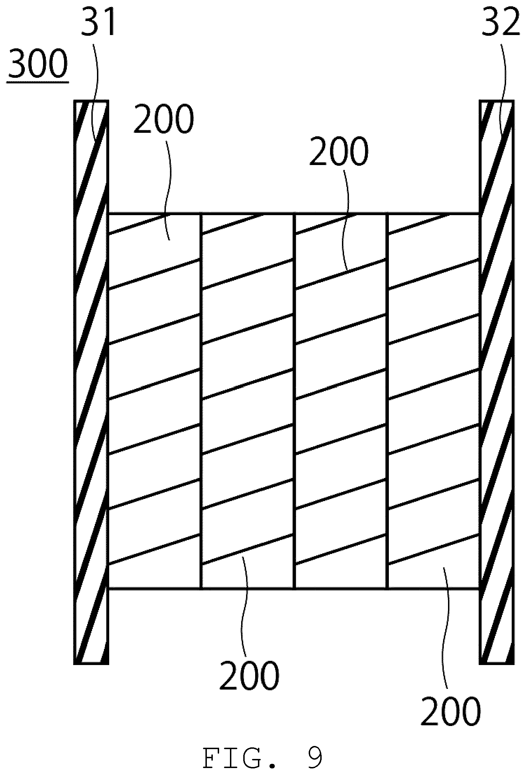

A fourth embodiment relates to a stack. FIG. 9 shows a schematic cross-sectional diagram of a stack 300 according to the fourth embodiment. As shown in FIG. 9, the stack 300 according to the fourth embodiment comprises a plurality of electrochemical cells 200 connected in series. Clamping plates 31 and 32 are attached to both ends of the stack 300.

When performing electrolysis, the amount of H₂, CO, or other carbon compounds produced by one electrochemical cell 200 is small, and when generating electricity, the amount of electricity generated by one electrochemical cell 200 is also small. Therefore, when multiple electrochemical cells 200 are connected in series to form a stack 300, the amount of products or electricity generation increases.

### (FIFTH EMBODIMENT)

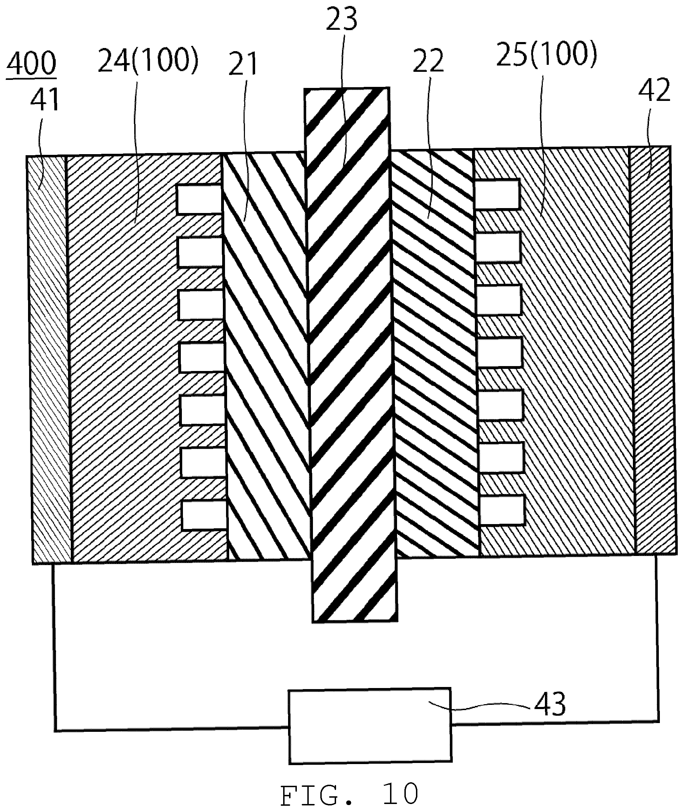

A fifth embodiment relates to an electrolytic device and a fuel cell. FIG. 10 shows a schematic diagram of the device 400 according to the fifth embodiment. The device 400 uses an electrochemical cell 200 or a stack 300. The device 400 illustrates a part of the configuration of an actual device.

The device 400 comprises the electrochemical cell 200, an anode current collector 41, a cathode current collector 42, and a power supply or load 43. The anode current collector 41 is provided at the first separator 24 of the electrochemical cell 200. The first separator 24 is electrically connected to the anode current collector 41.

The cathode current collector 42 is provided at the second separator 25 of the electrochemical cell 200. The second separator 25 is electrically connected to the cathode current collector 42.

The power supply or load 43 is connected between the anode current collector 41 and the cathode current collector 42.

When the device 400 is an electrolytic device, the power supply 43 is connected between the anode current collector 41 and the cathode current collector 42.

If the device 400 is a fuel cell, the load 43 is connected between the anode current collector 41 and the cathode current collector 42. The load 43 may be a power converter, battery, etc.

The invention will be described in more detail below with reference to examples. However, the invention is not limited to the following examples.

### (Example 1)

The electrochemical cell 200 having the configuration shown in FIG. 8 is fabricated. The separator 100 equipped with the supply connection channel 3 and the exhaust connection channel 5 as shown in the schematic diagram of FIG. 2 is used for the first separator 24 and the second separator 25.

### (Example 2)

The electrochemical cell 200 having the configuration shown in FIG. 8 is fabricated. The separator 100 equipped with the supply connection channel 3 and the exhaust connection channel 5 as shown in the schematic diagram of FIG. 3 is used for the first separator 24 and the second separator 25. As a result, by using PEEK material having a longitudinal elastic modulus of 2.5 [GPa] or more for the first protrusion-walls B and the second protrusion-walls C, it is possible to reduce the pressure loss by 23% compared to when a material having a longitudinal elastic modulus of less than 2.5 [GPa] is used.

### (Example 3)

The electrochemical cell 200 having the configuration shown in FIG. 8 is fabricated. The separator 100 equipped with the supply connection channel 3 and the exhaust connection channel 5 as shown in the schematic diagram of FIG. 4 is used for the first separator 24 and the second separator 25.

### (Example 4)

The electrochemical cell 200 having the configuration shown in FIG. 8 is fabricated. The separator 100 equipped with the supply connection channel 3 and an exhaust connection channel 5 as shown in the schematic diagram of FIG. 5 is used for the first separator 24 and the second separator 25.

### (Example 5)

The electrochemical cell 200 having the configuration shown in FIG. 8 is fabricated. The separator 100 equipped with the supply connection channel 3 and the exhaust connection channel 5 as shown in the schematic diagram of FIG. 6 is used for the first separator 24 and the second separator 25.

### (Example 6)

The electrochemical cell 200 having the configuration shown in FIG. 8 is fabricated. The separator 100 equipped with a supply connection channel 3 and an exhaust connection channel 5 as shown in the schematic diagram of FIG. 7 is used for the first separator 24 and the second separator 25.

### (Comparative Example 1)

The electrochemical cell 200 having the configuration shown in FIG. 8 is fabricated. A separator, in which the second protrusion-wall groups in the schematic diagram of FIG. 2 is omitted and one end of the first protrusion-walls B of the first protrusion-wall groups is directly connected to the flow channel 10 and the other end is directly connected to the supply manifold 4 or the exhaust manifold 6, is used for the first separator 24 and the second separator 25.

Electrolytic operation is performed under the same conditions using the electrochemical cells of Examples 1 to 6 and the electrochemical cell of Comparative Example 1. CO₂ is electrochemically decomposed into CO. Examples 1 to 6 all have reduced separator pressure loss compared to Comparative Example 1, and are able to perform electrolytic operation at lower cell voltages than Comparative Example 1.

Fuel cell operation is performed under the same conditions using the electrochemical cells of Examples 1 to 6 and the electrochemical cell of Comparative Example 1. Hydrogen (H₂) is used as the fuel. Examples 1 to 6 all exhibit reduced separator pressure loss compared to Comparative Example 1, and have superior IV characteristics compared to Comparative Example 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A separator (100) comprising:
a flow channel (10) comprising flow-channel walls (1) and flow-channel grooves (2) provided between the flow-channel walls (1);
a supply manifold (4);
an exhaust manifold (6);
a supply connection channel (3) connecting one end of the flow channel (10) to the supply manifold (4); and
an exhaust connection channel (5) connecting the other end of the flow channel (10) to the exhaust manifold (6), wherein
the supply connection channel (3) or/and the exhaust connection channel (5) comprise one or more first protrusion-wall groups including first protrusion-walls (B) and one or more second protrusion-wall groups including second protrusion-walls (C),
the first protrusion-walls (B) are aligned in a second direction which is a vertical direction relative to a first direction which is parallel to the flow-channel grooves (2) at the end portion of the flow channel (10),
the second protrusion-walls (C) are aligned in a second direction,
the first protrusion-wall groups and the second protrusion-wall groups are aligned in the first direction, and
the second protrusion-wall groups are offset in the second direction from the first protrusion-wall groups.

2. The separator (100) according to claim 1, wherein
the first protrusion-walls (B) and the second protrusion-walls (C) are cylindrical, or
a longitudinal direction of the first protrusion-walls (B) and the second protrusion-walls (C) is the first direction.

3. The separator (100) according to claim 1 or 2, wherein
the first protrusion-walls (B) and the second protrusion-walls (C) are cylindrical, or
a length of the first protrusion-walls (B) in the second direction is 0.01 times or more and 10 times or less of a length of the first protrusion-walls (B) in the first direction, and a length of the second protrusion-walls (C) in the second direction is 0.01 times or more and 10 times or less of a length of the second protrusion-walls (C) in the first direction.

4. The separator (100) according to any one of claims 1 to 3, wherein
the first protrusion-walls (B) are aligned with equal or substantially equal spacing in the second direction, and
the second protrusion-walls (C) are aligned with equal or substantially equal spacing in the second direction.

5. The separator (100) according to any one of claims 1 to 4, wherein
a gap exists between the first protrusion-wall groups and the second protrusion-wall groups where channels of the first protrusion-wall groups and the second protrusion-wall groups converge.

6. The separator (100) according to any one of claims 1 to 5, wherein
an average value of the offset the second protrusion-wall groups from the first protrusion-wall groups in the second direction is 0.1 times or more and 1 time or less of an average value of spacing of the first protrusion-walls aligned in the second direction.

7. The separator (100) according to any one of claims 1 to 6, wherein
a third direction is perpendicular to both the first direction and the second direction, and
vertical elastic modulus in the third direction of the first protrusion-walls (B) and the second protrusion-walls (C) is 2.5 [GPa] or more.

8. A separator (100) comprising:
a flow channel (10) comprising flow-channel walls (1) and flow-channel grooves (2) provided between the flow-channel walls (1);
a supply manifold (4);
an exhaust manifold (6);
a supply connection channel (3) connecting one end of the flow channel (10) to the supply manifold (4); and
an exhaust connection channel (5) connecting the other end of the flow channel (10) to the exhaust manifold (6), wherein
the supply connection channel (3) or/and the exhaust connection channel (5) include one or more third protrusion-wall groups including third protrusion-walls (D) and one or more fourth protrusion-wall groups including fourth protrusion-walls (E),
the third protrusion-walls (D) and the fourth protrusion-walls (E) are aligned a first direction which is parallel to the flow-channel grooves (2) at the end portion of the flow channel (10) ,
a length of the third protrusion-walls (D) in a second direction which is a vertical direction relative to a first direction is 1.1 times or more and 6 times or less of the length of the third protrusion-walls (D) in the first direction,
a length of the fourth protrusion-walls (E) in the second direction is 1.1 times or more and 6 times or less of a length of the fourth protrusion-walls (E) in the first direction, and
the third protrusion-wall groups and the fourth protrusion-wall groups are aligned in the second direction.

9. The separator (100) according to claim 8, wherein
the third protrusion-walls (D) and the fourth protrusion-walls (E) are aligned with equal or substantially equal spacing in the first direction.

10. The separator (100) according to claim 8 or 9, wherein
a third direction is perpendicular to both the first direction and the second direction, and
vertical elastic modulus in the third direction of the third protrusion-walls (D) and the fourth protrusion-walls (E) is 2.5 [GPa] or more.

11. The separator (100) according to any one of claims 8 to 10, wherein
the third protrusion-wall groups and the fourth protrusion-wall groups are arranged alternately in the second direction.

12. The separator (100) according to any one of claims 8 to 11, wherein
the supply connection channel (3) or/and the exhaust connection channel (5) further comprise one or more first protrusion-wall groups including first protrusion-walls (B) and one or more second protrusion-wall groups including second protrusion-walls (C),
the first protrusion-walls (B) and the second protrusion-walls (C) are arranged in the first direction, along which fluid flows at the end of the flow channel (10),
a length of the first protrusion-walls (B) in the second direction is 0.01 times or more and 10 times or less of a length of the first protrusion-walls (B) in the first direction,
a length of the second protrusion-walls (C) in the second direction is 0.01 times or more and 10 times or less of a length of the second protrusion-walls (C) in the first direction,
the third protrusion-wall groups are aligned in the first direction with the first protrusion-wall groups and the second protrusion-wall groups, and
the fourth protrusion-wall groups are aligned in the first direction with the first protrusion-wall groups and the second protrusion-wall groups.

13. The separator (100) according to any one of claims 8 to 12, wherein
the third protrusion-walls (D) and/or the fourth protrusion-walls (D) are inclined with respect to the second direction.

14. An electrochemical cell (200) comprising:
an anode (21);
a cathode (22);
an diaphragm (23) between the anode (21) and the cathode (22);
a first separator (24) on the anode on a side opposite to the diaphragm (23); and
a second separator (25) on the cathode on a side opposite to the diaphragm (23), wherein
the first separator (24) and/or the second separator (25) is the separator according to any one of claims 1 to 13.

15. An electrolytic device (400) comprising
the electrochemical cell (300) according to claim 14.
